(19) Europäisches Patentamt

European Patent Office

Office européen des brevets

(11) EP 1 469 610 A1

(12) EUROPEAN PATENT APPLICATION

(43) Date of publication:
20.10.2004 Bulletin 2004/43

(51) Int Cl.$^7$: H04B 1/707

(21) Application number: 03425234.6

(22) Date of filing: 15.04.2003

(84) Designated Contracting States:
AT BE BG CH CY CZ DE DK EE ES FI FR GB GR
HU IE IT LI LU MC NL PT RO SE SI SK TR
Designated Extension States:
AL LT LV MK

(71) Applicants:
• Siemens Mobile Communications S.p.A.
20126 Milano (IT)
• SIEMENS AKTIENGESELLSCHAFT
80333 München (DE)

(72) Inventors:
• Bahrenburg, Stefan
28832 Achim (DE)
• De Benedittis, Rossella
20137 Milano (IT)

(74) Representative: Giustini, Delio
Siemens Mobile Communications S.p.A,
Palazzo Gorky
Via Monfalcone, 1
20092 Cinisello Balsamo (IT)

(54) **Method to perform blind joint detection at the CDMA MS in presence of DMA exceptions**

(57) Blind joint detection is performed at the MS end points receiving a CDMA signal transmitted by the serving Base Station which makes exceptions to the Default Midamble Association (DMA) indication, and over-rules the default scheme in a pre-defined way signalling it in advance to the served MSs. In a first case the BS allocates less midambles to the assigned codes with respect to the broadcast DMA indication, declaring that the midamble assigned to a pool of orthogonal channelisation codes is the one defined for the first common root of these codes; on the other hand the MS assumes that all the channelisation codes which can be associated to a midamble meeting the above over-rule are also transmitted. In a second case the BS allocates different Spreading Factor (SF) values in a given time slot, declaring the maximum distance on the binary code tree admitted between SF values on the same time slot; on the other hand the MS assumes that the CDMA sequences are transmitted with the channelisation codes resulting from the lowest possible SF value and the broadcast DMA indication.

DMA indication when up to 16 midambles are configured per time slot

Figure 6

EP 1 469 610 A1

**Description**

**FIELD OF THE INVENTION**

The present invention relates to third generation (3G) mobile radio systems and in particular to a method to perform blind joint detection at the MS (Mobile Station) CDMA (Code Division Multiple Access) receiver upon the BS (Base Station) exceptions to the broadcast DMA (Default Midamble Association) indication. The method is useful in every case where the number of simultaneously received codes is not deterministically known at the receiving radio end point.

**STATE OF THE ART AND INTRODUCTION TO THE TECHNICAL PROBLEM**

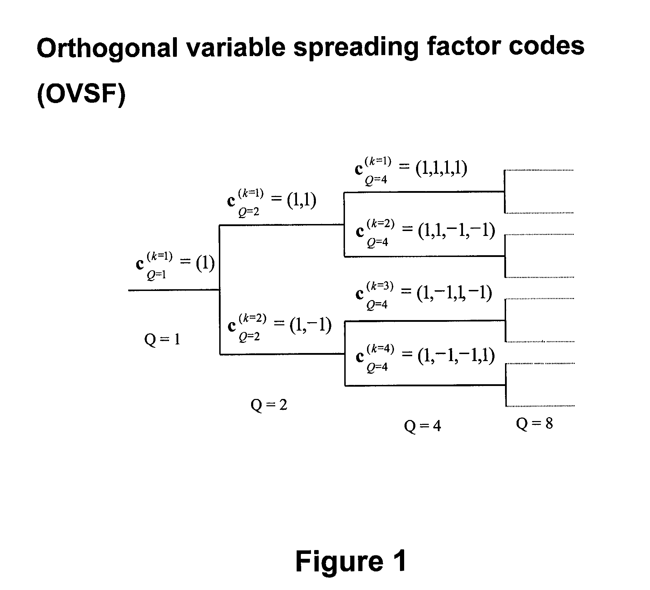

The CDMA technique implies that multiple signals be transmitted in the same time interval and in the same frequency band, but separated in the code domain. Third generation PLMNs (Public Land Mobile Network) such as UMTS (Universal Mobile Telecommunication System) are based on the CDMA technique. In case of DS-CDMA (Direct Sequence CDMA) each data bit of a user $k^{th}$ is spread out with a code sequence "$Q_k$" composed by Q time modulation units named "chips", with Q being multiple power of 2 (e.g.. Q equal to 1, 2, 4, 8 or 16) and defining the length of the Spreading Factor (SF) $Q_k$. A maximum number K of orthogonal sequences $Q_k$ is foreseen in an UMTS cell to simultaneously allocate a variable number of user signals either on the downink (DL) or the uplink (UL) link. **Fig.1** taken from **Ref. [1]** of the Bibliography cited at the end of the disclosure shows a partial binary code tree for the generation of OVSF codes (Orthogonal Variable Spreading Factors) such as the Walsh sequences. The same OVSF sequences used for transmitting are also used for de-spreading the received signal.

Though the spread sequences which are transmitted in the same time interval were in origin mutually orthogonal, the propagation channel (i.e. the fast fading) generally distorts the transmitted signal in a way that the spread sequences arrive no more perfectly orthogonal at the receiver. This is particularly true for the K signals transmitted in uplink by the K users, which undergone different propagation side effects on the K different propagation channels, but in minor measure the loss of orthogonality also affects the K signals transmitted in downlink by the base station towards the plurality of users. In the latter case, although each MS receives all the K signals along its own propagation channel, a residual loss of orthogonality is still possible by effect of noise, selective fading, or other side effects. Due to the loss of orthogonality, Multiple Access Interference (MAI) affects the reconstructed signal/s, unless sophisticated techniques are implemented to counterfeit the quality degrading. Joint Detection is one of said reception techniques, as described for example in **Ref. [2].** From a complexity viewpoint, Joint Detection is limited to a small number of spreading codes and therefore is generally employed in the 3G Time Division Duplex (TDD) systems where the maximum Spreading Factor value (or equivalently the maximum value of Q) is rather low, i.e. not beyond 16. Examples of such 3G TDD systems are the Low Chip Rate (LCR) TDD and the High Chip Rate (HCR) TDD modes, standardised within 3GPP, as well as the Time Division-Synchronous Code Division Multiple Access System for Mobile (TSM), standardised within CWTS.

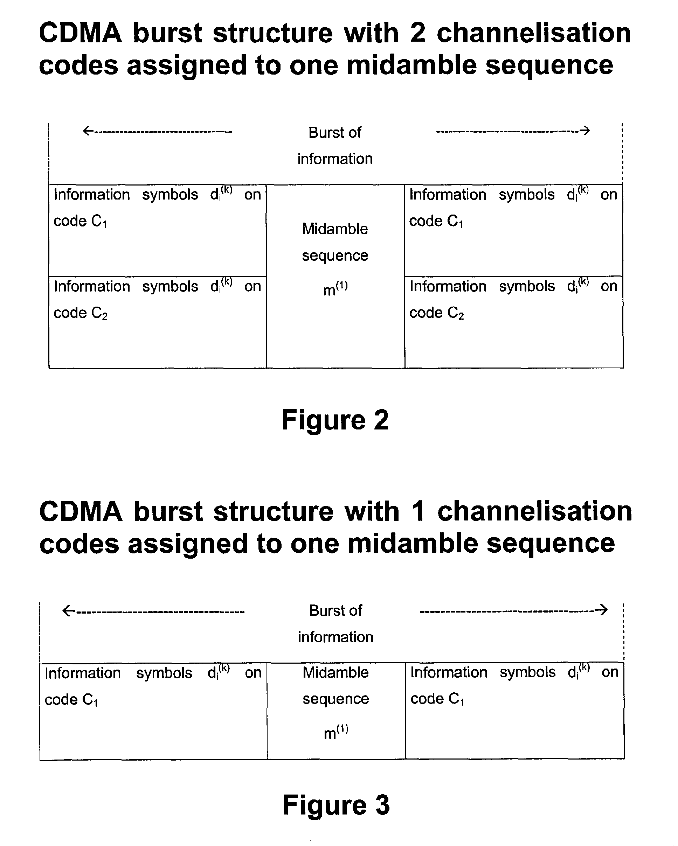

**Figures 2** and **3** depict two possible TDD burst structures of the time slot useful for an insight in Joint Detection technique. The two burst structures include a midamble sequence $m^{(1)}$ between two code sequences $d_i^{(k)}$. The two code sequences $d_i^{(k)}$ are spread up with orthogonal channelisation codes $c^{(k)}$ while the midamble sequences are not subjected to spreading code but are nevertheless least cross-correlated to make the K user channels each other distinguishable. The two depicted bursts are either referable to channels conveying traffic and/or signalling in dedicated mode or to common control channels conveying broadcast information messages towards all the mobiles of the cell. With reference to **fig.2,** the channel estimation performed on the midamble sequence $m^{(1)}$ is used to decode the information symbols (data) on the associated channelisation codes $c^{(1)}$ and $c^{(2)}$; whereas, with reference to **fig.3**, the channel estimation performed on the midamble sequence $m^{(1)}$ is used to decode the information symbols on the associated code $c^{(1)}$. The scenario of these figures can be extended to a plurality of channelisation codes $c^{(k)}$ (1 to 16) associated to the midambles $m^{(k)}$ in a way that will be successively discussed. Once the K codes $c^{(k)}$ are known, the joint detection technique leads to the following linear system:

$$e = A\,d + n \qquad\qquad (1)$$

where:

- 　**e** is a column vector containing signals $e_i$ received in correspondence of the two data portions of the TDD burst (with $e_i$ being the sample of the received signal at chip time $T_i$, which all the code multiplexed symbols transmitted at that given point in time contribute to);

- **A** is a matrix which includes the so-called signature $b^{(k)}$ given by the following convolution product: $b^{(k)} = c^{(k)} * h^{(k)}$ between each spreading code $c^{(k)}$ and the relevant propagation channel $h^{(k)}$ previously estimated in correspondence of the reception of the midamble $m^{(i)}$ associated to the spreading code/s $c^{(k)}$; where symbol "*" indicates convolution;
- **d** is a column vector containing all the unknown coded sequences;
- **n** is the column vector including the $n_i$ Additive White Gaussian Noise (AWGN) samples affecting the detection process.

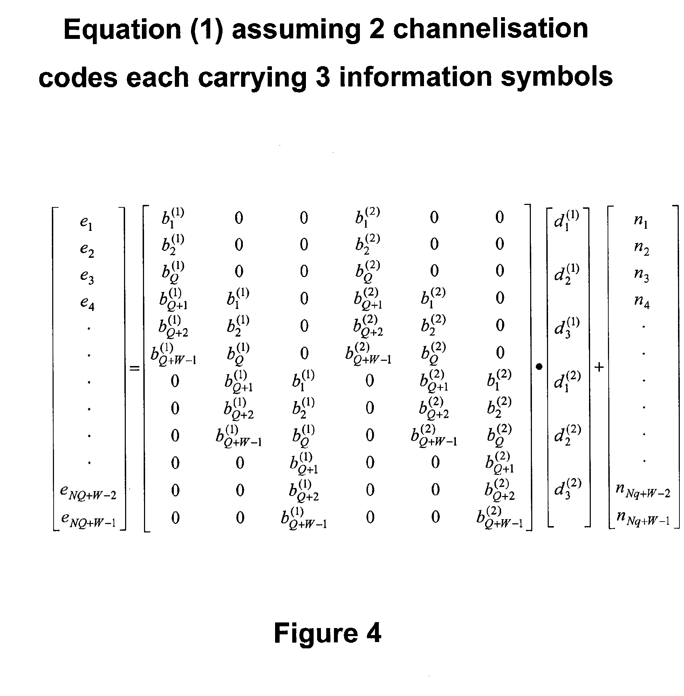

Equation (1) is represented in **fig.4** by exploding the involved vectors and the matrix **A**. With reference to this figure, "Q" gives the SF value; "W" gives the length of the channel tail in terms of chip samples. Different methods are foreseen in literature for the resolution of equation (1). A possible solution of the aforementioned equation (1) employs the so-called zero-forcing technique as described in **Ref. [3],** assuming the covariance matrix $\mathbf{R_n}$ of the noise sequences **n** as known at the receiver. In case $\mathbf{R_n}$ is not known, a possible assumption without significant performance degradation is to consider it proportional to the identity matrix (which is the assumption done in equation (1) above). Zero-forcing is a symbol decorrelator that operates on the expression (1) minimizing the quadratic form:

$$\left(e - \mathbf{A} \cdot \hat{\mathbf{d}}\right)^{H} \mathbf{R}_{n}^{-1} \left(e - \mathbf{A} \cdot \hat{\mathbf{d}}\right) \qquad (1.a)$$

whose aim is that of eliminating both ISI (Intersymbol Interference) and MAI interferences without considering the noise level. The solution of Eq. (1.a) is:

$$\hat{\mathbf{d}} = \left(\mathbf{A}^{H} \mathbf{R}_{n}^{-1} \mathbf{A}\right)^{-1} \cdot \mathbf{A}^{H} \mathbf{R}_{n}^{-1} \mathbf{e} \; = $$
$$= \underbrace{\mathbf{d}}_{\text{desired}} + \underbrace{\left(\mathbf{A}^{H} \mathbf{R}_{n}^{-1} \mathbf{A}\right)^{-1} \cdot \mathbf{A}^{H} \mathbf{R}_{n}^{-1} \mathbf{n}}_{\text{noise}} \qquad (1.b)$$

where: **d** is the vector of the estimated symbols, **d** is the vector of desired symbols containing no ISI nor MAI, and the second term is the residual noise. Equation (1.b) is suitable for noise levels not excessively high. The implemented zero-forcing algorithm may profitably include the following Cholesky decomposition:

$$A^{H} \cdot R_{n}^{-1} \cdot A = (\Sigma \cdot L)^{H} \cdot \Sigma \cdot L \qquad (1.c)$$

with $(...)^{H}$ designates conjugated transposition, **L** an upper triangular matrix with ones along the diagonal, and $\Sigma$ a diagonal matrix with real entries. The estimate (1b) becomes:

$$\hat{\mathbf{d}} = \underbrace{\left(\mathbf{\Sigma} \cdot \mathbf{L}\right)^{-1}}_{\substack{\text{ISI and MAI} \\ \text{eliminator}}} \cdot \underbrace{\left(\mathbf{L}^{H} \cdot \mathbf{\Sigma}\right)^{-1}}_{\substack{\text{Whitening} \\ \text{filter}}} \cdot \underbrace{\mathbf{A}^{H} \cdot \mathbf{R}_{n}^{-1} \cdot \mathbf{e}}_{\substack{\text{Whitening} \\ \text{matched} \\ \text{filter}}} \qquad (1.d)$$

The solution of system (1.d) is obtained in two steps introducing an auxiliary unknown vector **z**:

- vector **z** is firstly determined by the iterative solution of the first system:

$$(\Sigma \text{-} L)^{H} \cdot z = A^{H} \cdot R_{n}^{-1} \cdot e \qquad (1.e)$$

with the forward substitution method well known in matrix computation;

- then vector **d** is determined by the iterative solution of the second system:

$$(\textstyle\sum \cdot L)\cdot \hat{d} = z \tag{1.f}$$

with the known back substitution method.

When estimating propagation channels $h^{(k)}$ it's useful to remind that midambles are transmitted with individual power levels increasing with the distance between the BS and each MS addressee of the midamble. The near-far worst case has to be considered in the detection of the midambles. 3GPP specification mentioned at **Ref. [4]** states that $K$ pseudo-orthogonal midambles active in the same time interval are obtainable through as many time-shifted versions of one single periodic basic code having period $P = KW$ chips, where $W$ is already stated. Different cells use different periodic basic codes. This provision enables the BS and the specific MS to perform joint channel estimation for all the active users/signals within one single cyclic correlation. Because of the impulsive property of the autocorrelation function of each midamble, the joint channel estimation also implies the joint midamble detection. Each MS performs the joint midamble detection, but (obviously) only its own channel response is estimated (the aim of joint midamble detection will be explained soon). The joint midamble detection is carried out in known manner by the cyclic correlation of the received sequence, previously synchronised, with a copy of the basic midamble stored in the receiver. Thanks to the periodicity of the basic code, an unique correlation cycle provides as many shifted strongest power correlation peaks as the midambles effectively transmitted. Each correlation peak has to be compared with a common threshold opportunely set in order to distinguish, even in the worst case, a correlation peak against noise and interference.

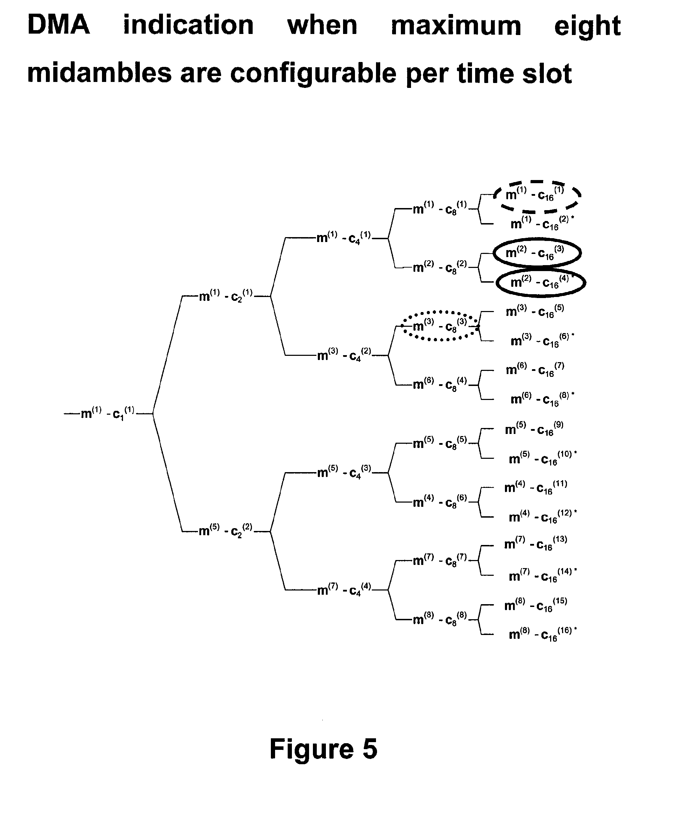

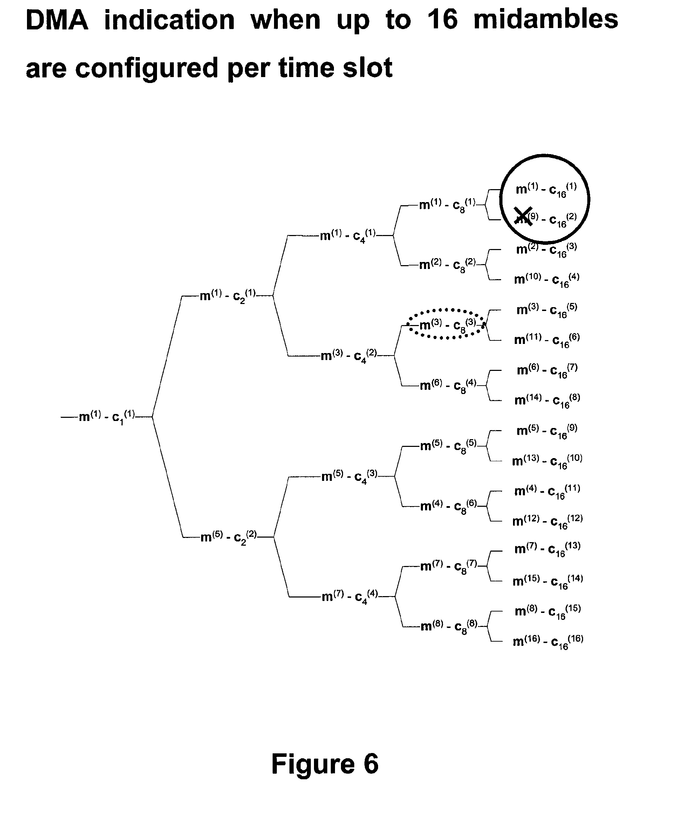

**The joint detection process considered in the present invention is the one performed by the MS receivers**. For this aim, all the MSs shall be made aware in advance of all the OVSF sequences, also termed channelisation codes, usable for CDMA transmissions from the serving cell. For this aim a so-called DMA (Default Midamble Association) indication is currently broadcast by the serving BS, as described in **Ref.[5]** and **Ref.[6]**. Examples of DMA indications are given in **fig.5** and **fig.6**, taken from the 3GPP specification mentioned in **Ref.[4]**. In spite that in joint detection the MS must know the other, besides the ones assigned to itself, OVSF codes, secrecy of the communications is assured by encryption; besides the only received sequence/s the MS forwards to the Viterbi's detector is/are the one/s relevant to its own SF code/s. Furthermore in joint detection, when the MS attempts to despread the CDMA signal with unused OVSF codes it estimates only the noise.

With reference to **fig.5** and **fig.6**, $m^{(i)}$ defines the $i^{th}$ midamble sequence, whereas $c_k^{(j)}$ defines the $j^{th}$ code sequence which, at a given root of the binary code tree, is assigned to a given midamble sequence. The number of leaves which spread from a root of the binary code tree corresponds to a given SF value. As for example, at the $2^{nd}$ root of the binary code tree of both **fig.5** and **fig.6,** the corresponding SF value is 4, as well as the number of allocable spreading codes $c_k^{(j)}$ ; this number is indicated by the value of the lower letter "k". With reference to **fig.5,** it can be derived that, e.g. at SF = 16, the midamble sequence $m^{(1)}$ corresponds to both spreading codes $c^{(1)}$ and $c^{(2)}$, whereas the midamble sequence $m^{(2)}$ corresponds to spreading codes $c^{(3)}$ and $c^{(4)}$ respectively. Via the DMA indication, the BS informs the receiving MSs of the association between a given midamble sequence and a given code, or set of codes, applied by that BS when assigning the radio resources over the air. Once the DMA scheme is received at the MS end points, the whole midamble sequences transmitted at burst-time shall be detected by each MS in order to derive the associated channelisation codes $c^{(k)}$, or set of codes, thus implicitly knowing which information to feed in its join detection machine.

In the TDD techniques it is also assumed that the spread symbols are transmitted at the same power of the associated midamble sequence such that, if "N" spreading codes are assigned to one midamble sequence, each of these codes will be transmitted at the linear power "1/N" of that of the associated midamble sequence, as well described in **Ref. [4].** With reference to **fig.2**, spreading code $C_1$ and spreading code $C_2$ are individually transmitted at half of the linear power used for the associated midamble sequence $m^{(1)}$. Whereas, with reference to **fig.3,** the only spreading code $C_1$ will be transmitted at the same power level as for the associated midamble sequence $m^{(1)}$. In the case where different spreading factors are used together with the same midamble, the ration of code power is inverse to the ration of spreading factors. For example, if there is a code at SF 16 and a code at SF 8 assigned to a single midamble, then the code at SF 8 has twice the power of the code at SF 16. As a consequence, the code at SF 16 has 1/3 of the linear power of the midamble whereas the code at SF 8 has 2/3 of the linear power of the midamble. As a consequence, the detected midamble sequence is used to estimate the power of the associated spreading codes. As will be detailed later on, the linear "1/N" power assumption may affect the performance of the joint detection.

Broadcasting of the applied DMA allows at the receiving MSs to make simple and reliable the joint detection process, the simplification consisting in that the MS exactly knows, from the detected midamble sequences, which codes to consider in the receiving process. On the other end, sometimes at the BS it may be convenient or needed to make exceptions to the declared DMA indication, e.g. in order to better accommodate new incoming MSs or to assist MSs in interference measurements or to assist a simplified MS in performing channel estimation. **Figures 5** and **6** both referred to standard DMA indications are helpful to discuss some exceptions.

**Fig.5** shows an example of DMA indication when a maximum of 8 midambles are configurable per time slot, so that for SF = 16 two SF codes are declared to each midamble. With reference to **fig.5**, a DMA regular assignment is indicated with two solid circles including code $c^{(3)}$ and $c^{(4)}$ at SF = 16, both assigned to the midamble $m^{(2)}$. In the same figure, a DMA exception is indicated with a dashed circle around the sole code $c^{(1)}$ also at SF = 16. This exception is given when the MS needs only one code for the requested service, whereas the declared DMA implies that two codes should always be assigned to one midamble sequence. In the outlined case, the ambiguity on the number of codes used for a given midamble sequence has to be dealt with. In the highlighted case, a DMA exception is actually already foreseen by the 3GPP specifications mentioned in **Ref.[4]**. At this purpose, two kinds of spreading codes are defined in the binary code tree: the primary codes (marked with a "*") and the secondary spreading codes. Of the first kind, are those spreading codes which are always allocated when the corresponding midamble sequence is transmitted, whereas the transmission of secondary codes is not assured and can be (partially) omitted, in an unpredictably way for the receiving MS.

**Fig.6** shows an example of DMA indication when up to 16 midambles are configurable per time slot, so that for a SF = 16 one sole code is declared to each midamble. With reference to **fig.6**, the greater circle highlights a DMA exception in which two codes $c^{(1)}$ and $c^{(2)}$ for a SF = 16 are assigned to the only midamble sequence $m^{(1)}$, instead of assigning spreading code $c^{(1)}$ to midamble sequence $m^{(1)}$ and spreading code $c^{(2)}$ to midamble sequence $m^{(9)}$ . In this second case, the BS would like to allocate one single midamble sequence for the two codes requested by an MS, e. g. in order to save one midamble sequence for interference measurement or to enlarge the channel estimation window to that particular MS. Also in this case, the ambiguity on the number of codes used for a given midamble sequence has to be dealt with.

Finally, another example is given when on a given time slot the supposed SF is 16 and the BS would like to allocate a resource at a lower SF (e.g. 8). This third DMA exception is represented in **fig.5** and **fig.6** with a dotted circle including the spreading code $c^{(3)}$ at SF 8 assigned to the midamble sequence $m^{(3)}$, rather than (with reference to **fig. 5)** the pair of codes $c^{(5)}$ and $c^{(6)}$ at SF = 16, or (with reference to **fig.6)** the single code $c^{(5)}$ as well at SF = 16. In this case, the further ambiguity on the spreading factors has to be dealt with.

In general, all the above-mentioned ambiguities have to be considered in an appropriate design for the MS receiver. For the BS all the channel allocations are known in advance, being the master in the resource assignment. In the above examples, it happens that an MS, listening to DMA indication broadcast by the serving BS, will assume a midamble-code configuration which does not correspond to the actual one. This has the effect of degrading the receiver performances mainly because of the erroneous assumptions on the number of channelisation codes which reflect into erroneous assignments of the power of the assumed coded symbols and an erroneous set of the interfering signals. Though, due to the linear form of equation (1) and to that different spreading codes transmitted in the same time interval and frequency band are orthogonal at the source, the following general remark will always apply: if for a given (set of) spreading code(s) lower power (PWL<1) than the effectively transmitted power is assumed, this will lead to a residual power difference acting as an additive noise/interference on those information symbols $d^{(i)}$ which are relevant for decoding at the receiving end-point. Example :

$$e_1 = b_1^{(1)} \cdot d_1^{(1)} \cdot PWL + b_1^{(2)} \cdot d_1^{(2)} + n_1 \qquad (2.a)$$

The reason behind is that this power scaling will also be reflected in the relevant signal, thus degrading its decoding process. On the other hand, if for a given spreading code (set of codes) higher power (PWH >1) than the effectively transmitted one is assumed, this will not lead to any additional residual interference on the relevant information symbols, as this extra power is automatically eliminated by the code orthogonality. Example:

$$e_1 = b_1^{(1)} \cdot d_1^{(1)} \cdot PWH + b_1^{(2)} \cdot d_1^{(2)} + n_1 \qquad (2.b)$$

From the above reasoning it appears that, with reference to **fig.5,** if the receiving MS assumes that N codes are associated to a given midamble sequence while actually only M, with M < N, are transmitted by the serving BS (e. g. because the BS has allocated none or a subset of the relevant secondary codes), less power than the assumed one will be received for these codes thus leading to the drawback highlighted above for the case (2.a). Similarly, with reference to **fig.6**, if the receiving MS assumes that N codes are associated to a given midamble sequence while actually M codes, with M>N, are transmitted by the peer transmitting end point, less interference codes than the effective ones will be removed by the joint detector process thus again degrading the reception quality on the relevant information symbols.

## OBJECTS OF THE INVENTION

The main object of the invention is that to add flexibility to the base station in doing exceptions to the DMA indication other than the simplest arbitrary use of the secondary channelisation codes, without leaving the mobile stations anchored to the preceding indication.

Other object of the invention is to put the mobile stations in a position of recovering from the BS exceptions without any sensible loss in the joint detection process respect to the case where the declared DMA indication is effectively followed by the serving BS.

## SUMMARY AND ADVANTAGES OF THE INVENTION

To achieve said objects the subject of the present invention is a method to perform blind joint detection at the mobile terminal end point receiving a CDMA signal transmitted by a fixed base station of a cellular telephone network, which makes exceptions to the DMA indication, as disclosed in the claims.

According to the method of the invention the base station over-rules the default scheme in a pre-defined way signalling it in advance to the served mobile stations; the latter for those midamble sequences judged to be transmitted assumes the signalled over-rule to determine the channelisation codes and the respective power entering the joint detection. The method adds great flexibility to the BS in doing exceptions to the DMA indication other than the simplest arbitrary use of secondary channelisation codes, and in meanwhile the receiving MSs are guided on how facing the BS exceptions in their joint detection process. The method of the invention is specialised to resolve two main cases: the first one is when the BS allocates less midamble sequences to the assigned codes with respect to the DMA indication; the second one is when the BS allocates different spreading factor SF values in a given time slot, contrarily to the adopted rule that a sole spreading factor SF shall be used in the same time slot, being the one currently assigned to the receiving MS.

In the first case (midamble) a joint detection criterion is addressed to the MS by declaring that the midamble assigned to a pool of orthogonal channelisation codes can be the one defined for the first common root father of these codes according to the binary code tree of the broadcast default midamble allocation scheme; on the other hand the MS assumes that all the channelisation codes which can be associated to a detected midamble meeting the above over-rule are also transmitted. The advantage is an additional flexibility at the BS allowing to save midamble sequences which can be used e.g. to request interference measurements, see **Ref. [7],** or to enlarge the channel estimation window towards some specific MSs.

In the **second case** (spreading factors) a joint detection criterion is addressed to the MS by declaring the maximum distance on the binary code tree admitted between different spreading factor values used in the same time slot; on the other hand the MS assumes that all the channelisation codes which can be associated to a detected midamble meeting the broadcast DMA are transmitted resulting from the lowest spreading factor value. The MS shall derive the lowest spreading factor value based on the spreading factor value assigned to its resources and the possible maximum distance declared by the serving cell such that: e.g. for an assigned SF equal to 16 and a declared maximum distance of 2, a lowest spreading factor value of 8 shall be assumed. The advantage is to add flexibility at the BS to allocate in a single time slot more Resource Units (RU) having different bit-rates.

Three variants are foreseen in combination with the two aforementioned main cases: a first one concerns an allocation criterion of the channelisation codes, while the two others concern re-doing, either totally or partially, of the joint detection in order to improve the final result.

According to the first variant the base station allocates with preference midamble sequences as much towards the bottom of the binary code tree. This prevents the MS to use too many unnecessary channelisation codes in the joint detection.

According to the second variant the MS checks, by comparison with a noise threshold, the power of all the detected sequences in order to find the actual channelisation codes; then, either totally or partially, redoes the joint detection process with the known code allocation. Despite an additional DSP power is needed, the degradation due to detecting more than the actual number of channelisation codes is reduced.

According to the third variant the MS acts as in the second variant but also checks the detected CDMA sequences for detecting their systematic phase correlation in order to identify the number of spreading factors SF actually being used and reconstruct the original sequences.

From all the above considerations it can be argued that an UMTS system employing the method of the invention benefits of greater flexibility respect to the current standard without degrading the quality of data detection. The method of the invention other than TDD is also valid for FDD (Frequency Division Duplexing) systems making use of a limited number of spreading codes.

## BRIEF DESCRIPTION OF THE DRAWINGS

The features of the present invention which are considered to be novel are set forth with particularity in the appended claims. The invention, together with further objects and advantages thereof, may be understood with reference to the following detailed description of an embodiment thereof taken in conjunction with the accompanying drawings given for purely non-limiting explanatory purposes and wherein:

-    **fig.1,** already described, shows a partial binary code tree for the generation of orthogonal spreading sequences $c_Q^{(k)}$ of different lengths, in accordance with the 3GPP specifications;
-    **figures 2** and **3**, already described, report two examples of TDD burst structure in accordance with the 3GPP specifications;
-    **fig.4**, already described, shows a possible system used by the MS receiver to perform joint detection;
-    **figures 5** and **6**, already described, show two standard DMA indications helpful to discuss some exceptions in accordance with the method of the present invention.

## DETAILED DESCRIPTION OF SOME PREFERRED EMBODIMENTS OF THE INVENTION

Some embodiments are now described to perform blind joint detection at the mobile station end point receiving a CDMA signal transmitted by a fixed base station of a cellular telephone network. For all the successive descriptions the following steps have to be considered as known:

a) the base station when assigning the radio resources over the air broadcast via the BCCH (Broadcast Common Control Channel) channel a default scheme (DMA) indicating according to a binary code tree the associations between each midamble sequence and one, or a subset of, orthogonal channelisation codes;
b) the base station when transmitting said CDMA signal makes exceptions to the default scheme leaving unresolved to the mobile stations the actual associations. This is for example the known case when one or more secondary channelisation codes are not transmitted;
c) the mobile station detects the presence of all the midambles transmitted together with said CDMA signal, and estimates its own channel response. As mentioned in the introduction, the correlation peak of each midamble has to be compared with a threshold opportunely set in order to distinguish, even in the worst case, the presence of the midamble against noise and interference. Midambles are generally transmitted by the base station with different power levels depending on the distances of the addressed MSs, so as on the flat fading and interference level on the relevant channels. The problem of setting a threshold to detect useful signal in presence of noise is a fundamental target in communication theory; see for example **Ref.[8]**;
d) the mobile station in concomitance with each detected midamble assumes the serving cell broadcast default assignment (DMA) from which inferring the channelisation codes and the transmission power of the relevant CDMA sequences entering the joint detection process. The inference rules for the transmission power have been described in the introduction. The DMA indication already contains the exception due to the uncertainty of the secondary codes. A reasonably default behaviour of the MS is to assume the secondary codes as being always transmitted by the BS. In case less than the default number of secondary codes are effectively transmitted, the MS will tentatively joint detect with too many codes than the strictly needed ones and will detect zero symbols for the unused codes. Since the performance in joint detection is the worse the more codes are detected, in this case some degradation can occur because the MS does not fully exploit the improvement it could have achieved if it would have known in advance about the effective number of used codes. Successively, an additional embodiment will be described for minimizing the possible degradation.

With reference to **fig.6** a first embodiment is described to resolve the case when the BS allocates less midamble sequences to the assigned codes with respect to the DMA indication, such that still the receiving MS can perform joint detection. The following behaviour is valid:

•    **at the BS side**: the BS over-rules the broadcast DMA indication in a pre-defined way, e.g. stating the new rules in the relevant specification or signalling it in advance to the served MSs as follows: for a given SF value, the midamble sequence assigned to a pool of spreading codes will be the one defined for the first common root of these codes according to the broadcast DMA indication. As for example, with reference to **fig.6** and for SF = 16, instead of assigning midamble sequence $m^{(1)}$ to spreading code $c^{(1)}$ and midamble sequence $m^{(5)}$ to spreading code $c^{(9)}$, the only midamble sequence $m^{(1)}$ can be assigned to the above pair of codes, being $m^{(1)}$ the midamble

sequence defined for the first common root of these two codes for the specific DMA scheme;

- **at the MS side**: for those midamble sequences judged to be transmitted, the MS assumes that all the channelisation codes which can be possibly associated to according to the broadcast DMA and above mentioned over-rule are also transmitted. With reference to the example of above, the MS operating at SF = 16 which detects only the midamble sequence $m^{(1)}$, will then assume that all the 16 spreading codes are in use.

This assumption may imply for the MS to consider in its joint detection process too many additional channelisation codes respect to the ones effectively used by the serving BS, thus loosing in performances. A way to limit this effect is to limit the number of step-backs that the BS is allowed to do in the binary code tree. As for example by limiting this number to 1, and again taking the same example above, this would imply that the MS, at the detection of the single midamble sequence $m^{(1)}$, shall assume that both spreading code $c^{(1)}$ and spreading code $c^{(2)}$ are in use.

With reference to the **figures 5** and **6**, a **second** embodiment is described to resolve the case when different spreading factor SF values can be used in a given time slot. The OVSF codes of different lengths can be used in the same time interval for transmitting with different data-rates, under the constraint that lower spreading factors are selected going back on the binary code tree until a common root is reached and then selecting the other leaf. We remind that according to the adopted rule a sole spreading factor SF shall be used in the same time slot, but the BS makes exception and decides to adopt a variable spreading factor in the same time slot. The following behaviour is valid:

- **at the BS side:** the BS managing radio resources at different values of spreading factors on the same time slot, shall assign channelisation codes to a given midamble sequence according to the broadcast DMA indication. It over-rules the broadcast DMA indication in a pre-defined way (as for the preceding case) signalling in advance to the served MSs the number of the possible SF values that can be allowed in a time slot. The over-ruled information can be signalled in compact form, e.g.. indicating the maximum gap between the admitted spreading factors, to say the ratio > 1 between higher and lower SF values. As for example with reference to **fig.5**, the BS shall assign spreading code $c^{(1)}$ at SF = 8 to the midamble sequence $m^{(1)}$ and spreading code $c^{(3)}$ at SF = 16 to the midamble sequence $m^{(2)}$ , signalling a gap of 2. The gap measures the distance, as power of 2, between leaves of the binary code tree that are met stepping back towards a common father;
- **at the MS side**: the MS for those midamble sequences judged to be transmitted assumes that the channelisation code allocation resulting from the lowest spreading factor value is used. As for example, with reference to **fig.5**, assuming that the MS detects midamble sequence $m^{(1)}$ and $m^{(2)}$ and that there is no limit to the lowest possible SF value applied by the serving BS (i.e. the signalled gap value is 16), the MS shall assign to these midambles spreading code $c^{(1)}$ at SF = 8 and spreading code $c^{(2)}$ at SF = 8, respectively; note that this is the lowest SF value that can be assumed, due to that spreading codes are still transmitted orthogonal by the serving BS. For this aim it is exploited the fact that a given spreading code can be seen composed by two consecutive spreading codes belonging to the father leaf. As for example, with reference to the binary code tree reported in **fig.6** and considering **Ref. [1],** it can be seen that the spreading code at SF = 4 given by "1; -1; -1; +1" can be seen composed by two consecutive father spreading codes "1; -1" apart from a sign inversion, or without sign inversion if the brother spreading code "1; -1; 1; -1" is considered. In case the assumed lower spreading factor (e.g. SF = 2) is actually used by the serving BS, the detection result will be simply correct. In case a single code of the higher spreading factor value (e.g. SF = 4) is actually used, the detection result can be two code words carrying the same symbols, or possibly two symbols of opposite sign. In case two, or more, spreading codes of a higher SF value are actually used (e.g. the two sister codes at SF = 4), the detected symbols will be a linear combination of the transmitted symbols on the actually used spreading codes, according to their respective composition. In any case there is no interference problem for a linear receiver, like the joint detector. The only task of the MS receiver is to reconstruct the original signals starting from the knowledge of the over-rule information and the detected signals. A section of the receiver equipped in the MS can be devoted to resolve the phase inversion and the redundancy.

The draw back of this embodiment is a performance degradation resulting from the non-exploitation of the actual midamble-to-spreading-code association in case spreading codes at higher SF values are actually assigned. A way to minimise this drawback is to limit the over-ruled distance, such that the number of possible SF values that can be allowed in a time slot be consequently limited.

With reference to the **figures 5** and **6**, a first variant, implementable on the top of the two preceding embodiments, is described. This variant is charged to the only BS as a sound way to guide the MS in the detection of the midamble-to-spreading-code configuration actually applied by the serving BS; the detection task is simplified at the MS by reducing the possible combinations and the number of coded sequences to be detected. Practically, the BS allocates with preference midamble sequences as much towards the bottom of code tree; as for example with reference to **fig.5** for SF = 16, allocates midamble sequence $m^{(16)}$ before midamble sequence $m^{(8)}$. This variant exploits that, in case the midamble sequences are allocated moving from the bottom towards the top ($m^{(16)}$) of the binary code tree,

EP 1 469 610 A1

they will be likely detected by the MS without ambiguity and then the MS would detect the maximum number of codes along-going with the aforementioned performance degradations; consequently the number of codes used by the MS for its joint detection process will be generally less than without such a variant. As an example, with reference to **fig. 5** and for SF = 16, assuming that the serving BS can step back to the father leaf of the binary code tree, if the MS detects midamble sequence $m^{(16)}$ it will unambiguously know that only spreading code $c^{(16)}$ is transmitted, whereas if it detects midamble sequence $m^{(4)}$ it will assume that, besides spreading code $c^{(11)}$, also spreading code $c^{(12)}$ is transmitted, which may not be the case.

Now a second variant, implementable on the top of the two preceding embodiments and usable in combination with the first variant, is described. The second variant is charged to the only MS as a sound way to reduce the degradation due to detecting more than the actual number of channelisation codes. Practically, the MS analyses the symbol power of the detected CDMA sequences and then, e.g. by comparison against a noise threshold, decides which channelisation codes have been actually used. Then the MS, either totally or partially, redoes the joint detection process with the known code allocation. In a partial redetection the MS redoes the joint detection considering only those channelisation code/s judged to be actually used. A low complexity partial redetection is to insert zeros in the back substitution step (Eq. 1.f) wherever symbols are concerned which belong to a code having been identified to be unused. This variant is applying an iterative approach for the joint detection exploiting that in the first stage of the detection process the interference is removed with possible performance degradation and that in the second stage the performance degradation is removed.

Now a third variant, implementable in combination with the second variant, is described. The second variant is charged to the only MS as a sound way to reduce the degradation due to detecting with the wrong SF value in the MS. Practically, the MS analyses the detected CDMA sequences for their code power and their systematic phase correlation in order to identify the number of codes and the SF factors actually being used. Then the MS, either totally or partially, redoes the joint detection process with the known code allocation. A low complexity partial redetection would be to calculate, by means of the aforementioned linear combinations, the detected symbols and then inserting the results in the 2nd back substitution process wherever symbols are concerned, which belong to a code having been identified to be operated with the wrong spreading factor value. Also this variant is applying an iterative approach for the detection exploiting that in the first stage of the joint detection process the interference is removed with possible performance degradation and that in the second stage the performance degradation is removed.

## BIBLIOGRAPHY

**[1]** 3GPP - TS 25.223: "Spreading and modulation (TDD)".

**[2]** "Joint Detection with coherent receiver antenna diversity in CDMA mobile radio systems", P. Jung, J. Blanz; IEEE: Transaction on vehicular technologies, Vol. 44 N1, February 1995.

**[3]** "Zero forcing and Mean Square Error Equalisation for Multi-User Detection in Code Division Multiple Access channels", A. Klein, G.K. Kaleh, P. Baier; IEEE: Transaction on vehicular technologies, Vol. 45, May 1996.

**[4]** 3GPP - TS 25.221: "Physical channels and mapping of transport channels onto physical channels (TDD)".

**[5]** 3GPP - TS 25.331: "Radio Resource Control (RRC) protocol specification".

**[6]** 3GPP - TSM 04.08: "Mobile radio interface layer 3 specification".

**[7]** 3GPP - TS 25.224: "Physical layer procedures (TDD)".

**[8]** "Digital Communications", John G. Proakis, Fourth Edition, McGraw-Hill Series in Electrical and Computer Engineering.

## Claims

**1.** Method to perform blind joint detection at the mobile station end point receiving a CDMA signal by a fixed base station of a cellular telephone network, including the steps of:

a) the base station when assigning the radio resources broadcast a default scheme indicating, according to a binary code tree, the associations between each midamble sequence and one, or a subset of, orthogonal channelisation codes;

b) the base station makes exceptions to the default scheme when transmitting said CDMA signal;

c) the mobile station detects the presence of all transmitted midambles to infer relevant parameters entering the joint detection, **characterised in that:**

- the base station before transmitting at step b) over-rules the default scheme in a pre-defined way signalling it to the served mobile stations;
- the MS at step c), for those midamble sequences judged to be transmitted, assumes the maximum channelisation codes as allowed by the signalled over-rule to the broadcast default scheme to determine both the channelisation codes and the individual power to be entered in the joint detection process.

2. The method of the preceding claim, **characterised in that** said over-rule consists of declaring that the midamble assigned to a pool of orthogonal channelisation codes is the one defined for the first common root father of these codes according to said binary code tree of the broadcast default scheme.

3. The method of the preceding claim, **characterised in that** said over-rule limits the step-backs in the binary code tree to a fixed number of leaves.

4. The method of the preceding claim, **characterised in that** the mobile station at step c) assumes that all the channelisation codes which can be associated to an midamble meeting the over-rule are also transmitted.

5. The method of the claim 1, **characterised in that** said over-rule consists of declaring the maximum distance on the binary code tree between different spreading factor values used in the same time slot.

6. The method of the preceding claim, **characterised in that** said distance limits the number of spreading factor values allowed in the same time slot.

7. The method of the preceding claim, **characterised in that** the mobile station at step c) assumes that the transmitted channelisation codes are all the possible ones resulting by adopting the lowest possible spreading factor value in the broadcast default scheme.

8. The method of one of the preceding claims, **characterised in that** the base station allocates with preference midamble sequences as much towards the bottom of the binary code tree of the broadcast default scheme.

9. The method of one of the preceding claims, **characterised in that** the mobile station detects which channelisation codes are actually used and then redoes the whole joint detection stage considering all the actual channelisation code/s only.

10. The method of one of the preceding claims from 1 to 8, **characterised in that** the mobile station detects which channelisation codes are actually used and then partially redoes the joint detection considering all the actual channelisation code/s only.

11. The method of one of the preceding claims from 1 to 8, **characterised in that** the mobile station detects which channelisation codes are actually used and then partially redoes the joint detection considering a fraction of the actual channelisation code/s only.

12. The method of one of the preceding claims from 5 to 8, **characterised in that** the mobile station detects both which channelisation codes and the number of spreading factor values are actually used in the time slot, then redoes the joint detection stage considering the actual information.

13. The method of the preceding claim, **characterised in that** the detected symbol sequences corresponding to the ones effectively transmitted are each other phase correlated in order to obtain the correct sequences transmitted with the original spreading factor.

14. The method of one of the preceding claims from 9 to 13, **characterised in that** the detection of the effectively transmitted channelisation codes is performed by measuring the power of the detected symbol sequences and comparing with a noise threshold.

# Orthogonal variable spreading factor codes (OVSF)

$$c_{Q=4}^{(k=1)} = (1,1,1,1)$$

$$c_{Q=2}^{(k=1)} = (1,1)$$

$$c_{Q=4}^{(k=2)} = (1,1,-1,-1)$$

$$c_{Q=1}^{(k=1)} = (1)$$

$$c_{Q=4}^{(k=3)} = (1,-1,1,-1)$$

$$c_{Q=2}^{(k=2)} = (1,-1)$$

$$c_{Q=4}^{(k=4)} = (1,-1,-1,1)$$

$Q = 1$

$Q = 2$

$Q = 4$

$Q = 8$

# Figure 1

## CDMA burst structure with 2 channelisation codes assigned to one midamble sequence

| ←----------------------- Burst of information ----------------------→ | | |
|---|---|---|
| Information symbols $d_i^{(k)}$ on code $C_1$ | Midamble sequence $m^{(1)}$ | Information symbols $d_i^{(k)}$ on code $C_1$ |
| Information symbols $d_i^{(k)}$ on code $C_2$ | | Information symbols $d_i^{(k)}$ on code $C_2$ |

## Figure 2

## CDMA burst structure with 1 channelisation codes assigned to one midamble sequence

| ←----------------------- Burst of information ----------------------→ | | |
|---|---|---|
| Information symbols $d_i^{(k)}$ on code $C_1$ | Midamble sequence $m^{(1)}$ | Information symbols $d_i^{(k)}$ on code $C_1$ |

## Figure 3

# Equation (1) assuming 2 channelisation codes each carrying 3 information symbols

$$
\begin{bmatrix}
e_1 \\
e_2 \\
e_3 \\
e_4 \\
\cdot \\
\cdot \\
\cdot \\
\cdot \\
\cdot \\
\cdot \\
\cdot \\
e_{NQ+W-2} \\
e_{NQ+W-1}
\end{bmatrix}
=
\begin{bmatrix}
b_1^{(1)} & 0 & 0 & b_1^{(2)} & 0 & 0 \\
b_2^{(1)} & 0 & 0 & b_2^{(2)} & 0 & 0 \\
b_Q^{(1)} & 0 & 0 & b_Q^{(2)} & 0 & 0 \\
b_{Q+1}^{(1)} & b_1^{(1)} & 0 & b_{Q+1}^{(2)} & b_1^{(2)} & 0 \\
b_{Q+2}^{(1)} & b_2^{(1)} & 0 & b_{Q+2}^{(2)} & b_2^{(2)} & 0 \\
b_{Q+W-1}^{(1)} & b_Q^{(1)} & 0 & b_{Q+W-1}^{(2)} & b_Q^{(2)} & 0 \\
0 & b_{Q+1}^{(1)} & b_1^{(1)} & 0 & b_{Q+1}^{(2)} & b_1^{(2)} \\
0 & b_{Q+2}^{(1)} & b_2^{(1)} & 0 & b_{Q+2}^{(2)} & b_2^{(2)} \\
0 & b_{Q+W-1}^{(1)} & b_Q^{(1)} & 0 & b_{Q+W-1}^{(2)} & b_Q^{(2)} \\
0 & 0 & b_{Q+1}^{(1)} & 0 & 0 & b_{Q+1}^{(2)} \\
0 & 0 & b_{Q+2}^{(1)} & 0 & 0 & b_{Q+2}^{(2)} \\
0 & 0 & b_{Q+W-1}^{(1)} & 0 & 0 & b_{Q+W-1}^{(2)}
\end{bmatrix}
\bullet
\begin{bmatrix}
d_1^{(1)} \\
d_2^{(1)} \\
d_3^{(1)} \\
d_1^{(2)} \\
d_2^{(2)} \\
d_3^{(2)}
\end{bmatrix}
+
\begin{bmatrix}
n_1 \\
n_2 \\
n_3 \\
n_4 \\
\cdot \\
\cdot \\
\cdot \\
\cdot \\
n_{Nq+W-2} \\
n_{Nq+W-1}
\end{bmatrix}
$$

## Figure 4

**DMA indication when maximum eight midambles are configurable per time slot**

**Figure 5**

# DMA indication when up to 16 midambles are configured per time slot

**Figure 6**

**European Patent Office**

**EUROPEAN SEARCH REPORT**

Application Number

EP 03 42 5234

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y<br>X | US 2002/110099 A1 (ZEIRA ELDAD ET AL) 15 August 2002 (2002-08-15)<br>* abstract *<br>* page 1, paragraph 6 - paragraph 7 *<br>* page 1, paragraph 8 - paragraph 9 *<br>* page 2, paragraph 17 - paragraph 21 *<br>* claim 1 *<br>* figures 4-6 *<br>--- | 1<br><br>9-11,14 | H04B1/707 |
| Y | EP 1 143 638 A (MITSUBISHI ELECTRIC INF TECH) 10 October 2001 (2001-10-10)<br>* page 2, paragraph 9 - paragraph 10 *<br>* page 2, paragraph 14 - paragraph 16 *<br>* page 3, paragraph 20 - paragraph 21 *<br>* page 4, paragraph 37 *<br>* page 4, paragraph 42 *<br>----- | 1 | |

**TECHNICAL FIELDS SEARCHED (Int.Cl.7)**

H04B

The present search report has been drawn up for all claims

| Place of search | Date of completion of the search | Examiner |
|---|---|---|
| THE HAGUE | 29 August 2003 | Amadei, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 03 42 5234

This annex lists the patent family members relating to the patent documents cited in the above-mentioned European search report.
The members are as contained in the European Patent Office EDP file on
The European Patent Office is in no way liable for these particulars which are merely given for the purpose of information.

29-08-2003

| Patent document cited in search report | | Publication date | Patent family member(s) | | Publication date |
|---|---|---|---|---|---|
| US 2002110099 | A1 | 15-08-2002 | US | 2001024426 A1 | 27-09-2001 |
| | | | US | 2002097698 A1 | 25-07-2002 |
| | | | AU | 3323701 A | 14-08-2001 |
| | | | BR | 0108290 A | 05-03-2003 |
| | | | CA | 2399078 A1 | 09-08-2001 |
| | | | CN | 1398458 T | 19-02-2003 |
| | | | DE | 1252723 T1 | 28-05-2003 |
| | | | EP | 1252723 A2 | 30-10-2002 |
| | | | JP | 2003522463 T | 22-07-2003 |
| | | | NO | 20023623 A | 17-09-2002 |
| | | | TW | 508923 B | 01-11-2002 |
| | | | WO | 0158041 A2 | 09-08-2001 |
| EP 1143638 | A | 10-10-2001 | EP | 1143638 A1 | 10-10-2001 |
| | | | AU | 4463301 A | 15-10-2001 |
| | | | CN | 1383640 T | 04-12-2002 |
| | | | WO | 0176116 A1 | 11-10-2001 |
| | | | US | 2003058925 A1 | 27-03-2003 |

EPO FORM P0459

For more details about this annex : see Official Journal of the European Patent Office, No. 12/82